# NEUE EUROPÄISCHE PATENTSCHRIFT

(11) **EP 2 255 991 B2**
(45) Veröffentlichungstag und Bekanntmachung des Hinweises auf die Entscheidung über den Einspruch: **17.02.2021**
(45) Hinweis auf die Patenterteilung: 19.03.2014
(21) Anmeldenummer: 10152165.6
(22) Anmeldetag: 29.01.2010
(51) Int. Cl.: B60M 1/30

(54) **Stromschiene**
Current bar
Rail conducteur

(30) Priorität: 28.05.2009 DE 102009022963
(43) Veröffentlichungstag der Anmeldung: 01.12.2010
(73) Patentinhaber: Siemens Mobility GmbH, 81739 München (DE)
(72) Erfinder: Hahn, Gunter, 91353 Hausen (DE); Edel, Roland, 91589 Aurach (DE); Rister, Stephan, 90469 Nürnberg (DE)

(56) Entgegenhaltungen:
- EP-A1- 1 484 214
- WO-A1-97/36764
- WO-A1-02/102617
- DE-A1- 2 159 087
- DE-U1-202004 009 420
- DE-U1-202004 009 420
- FR-A1- 2 185 838
- FR-A1- 2 468 691
- JP-A- H 079 896
- JP-A- H11 115 557

## Beschreibung

Die Erfindung betrifft eine Stromschiene nach dem Oberbegriff des Anspruchs 1.

Eine solche Stromschiene ist aus dem Aufsatz von Urs Beat Wili "Stromschienenoberleitung für Geschwindigkeiten bis 160 km/h" in Elektrische Bahnen eb 87 (1989) 10, Seiten 310 bis 315, bekannt. Bei dieser Stromschiene befinden sich jeweils eine Stoßlasche einander gegenüber liegend zwischen den beiden Klemmarmen. Dabei greifen Anformungen der Stoßlaschen in Ausnehmungen, die sich in den Spannarmen befinden, ein. Die Stoßlaschen bewirken sowohl eine mechanische als auch eine elektrische Verbindung zwischen zwei aneinanderzufügenden Stromschienen. Das Aneinanderfügen einzelner Stromschienen zu einem Stromschienenstrang ist notwendig, weil sehr lange Stromschienen nicht handhabbar sind.

Aus der DE 202004009 420 U1 ist eine Stromschiene nach dem Oberbegriff des Anspruchs 1 bekannt.

Der Erfindung liegt die Aufgabe zugrunde, eine Stromschiene anzugeben, die mit einer an sie anschließenden Stromschiene stabil und zuverlässig mechanisch verbunden werden kann, wobei dann auch eine elektrisch leitende Verbindung mit geringem Übergangswiderstand gegeben ist.

Die Aufgabe wird gemäß der Erfindung durch den kennzeichnenden Teil des Anspruchs 1 gelöst.

Dadurch, dass die Stoßlaschen von außen auf die Spannarme aufsetzbar sind, ist eine mechanische Verspannung von zwei Stromschienen in einfacher Weise und trotzdem zuverlässig aufzubauen. Dadurch, dass sich in den Spannarmen keine Ausnehmungen befinden, sondern die Spannarme mit Anformungen ausgestattet sind, können die Spannarme vorteilhaft materialsparend dünn sein. Falls Ausnehmungen nötig wären, müsste nämlich die im Bereich der Ausnehmungen verbleibende Materialstärke ausreichen, um die notwendige Stabilität zu gewährleisten. Man erzielt eine stabile Konstruktion, die einfach aufzubauen ist, obwohl gegenüber einer bekannten Stromschiene weniger Material benötigt wird.

Durch die nach außen gerichteten Anformungen an den Klemmarmen, die nicht überall durch Stoßlaschen überdeckt sind, erzielt man den zusätzlichen Vorteil, dass überschüssige Wärme einfach nach außen abgestrahlt werden kann. Die überschüssige Wärme entsteht durch den elektrischen Strom in der Stromschiene.

Die Anformungen der Spannarme haben beispielsweise ein rechteckiges, trapezförmiges, halbkreisförmiges, ovales oder dreieckiges Profil. Die Ausnehmungen in den Stoßlaschen haben dann ein entsprechendes Profil, so dass die Stoßlaschen formschlüssig auf die Spannarme aufgesetzt werden können.

Beispielsweise weist jeder Spannarm zwischen dem Querträger und dem Klemmarm mindestens drei untereinander angeordnete Anformungen auf und jede Stoßlasche weist die gleiche Anzahl untereinander angeordnete Ausnehmungen auf. Dadurch ist eine stabile Befestigung der Stoßlaschen an den Spannarmen gegeben.

Nach einer besonderen Weiterbildung der Stromschiene nach der Erfindung sind den Stoßlaschen gegenüberliegend auf den einander zugewandten Seiten der Spannarme innere Laschen anbringbar. Diese inneren Laschen dienen nicht vordringlich der mechanischen Stabilität. Sie sind vielmehr vorgesehen, um eine verbesserte elektrische Verbindung zwischen aneinander grenzenden Stromschienen zu gewährleisten. Die vergleichsweise großen Auflageflächen der inneren Laschen führen zu geringen Übergangswiderständen zwischen den Spannarmen und den inneren Laschen. Die elektrische Verbindung von zwei Stromschienen wird durch die inneren Laschen deutlich verbessert. Die inneren Laschen tragen darüber hinaus auch zur mechanischen Stabilität bei.

Beispielsweise liegen die inneren Laschen flächig an den Spannarmen an. Dadurch ist vorteilhaft ein besonders geringer Übergangswiderstand gegeben.

Beispielsweise sind die Stoßlaschen mittels Schrauben an den Spannarmen befestigbar. Dadurch ist eine besonders stabile Befestigung gegeben.

Beispielsweise sind die Schrauben beschichtet und/oder weisen eine Klebstoffsicherung auf. Die Haftung der Schrauben ist dadurch verbessert.

Beispielsweise sind die Schraubenköpfe der Schrauben in den Stoßlaschen versenkt und die Materialstärke der Stoßlaschen ist nicht größer als die Bauhöhe eines Schraubenkopfes mit Unterlegscheibe. Es hat sich herausgestellt, dass es für eine Spannlasche hinsichtlich ihrer mechanischen Stabilität ausreichend ist, wenn sie unter einer Schraube die Dicke einer Unterlegscheibe hat. Wenn die Schrauben, mit denen die Stoßlaschen an den Spannarmen befestigt sind, mit ihren Schraubenköpfen in entsprechenden Ausnehmungen versenkt sind, kommt man mit wenig Platz für die Stoßlaschen aus. Das ist sehr vorteilhaft, weil zum Beispiel ein Montagewagen zum Einziehen des Fahrdrahtes in die Stromschiene ausreichend Platz benötigt.

Beispielsweise sind die inneren Laschen mittels der Schrauben an den Spannarmen befestigbar, indem die Schrauben die Spannarme durchdringen und in die inneren Laschen eingreifen. Dadurch ist eine einfache und besonders stabile Befestigung der inneren Laschen gegeben.

Beispielsweise sind mit jedem Spannarm zwei oder mehr Stoßlaschen verbindbar.

Auf jedem Spannarm sind beispielsweise zwei oder mehr innere Laschen anbringbar.

Diese Stoßlaschen und/oder innere Laschen sind untereinander am Spannarm angeordnet und verbessern die Zuverlässigkeit.

Mit der Stromschiene nach der Erfindung wird insbesondere der Vorteil erzielt, dass mit einfachen Mitteln eine stabile Verbindung von zwei Stromschienen gegeben ist, die wenig Platz braucht und leicht handhabbar ist. Durch die inneren Laschen ist eine Trennung der mechanischen Verbindung über die von außen aufgesetzten Stoßlaschen von der elektrischen Verbindung über die inneren Laschen gegeben. Die große Auflagefläche der inneren Laschen ermöglicht eine besonders gute elektrische Verbindung.

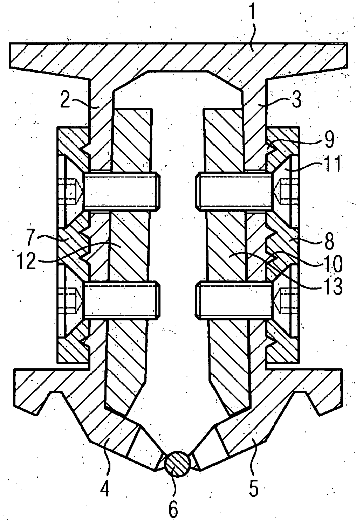

Ein Ausführungsbeispiel für eine Stromschiene nach der Erfindung wird anhand der Zeichnung näher erläutert:
Die Stromschiene weist einen Querträger 1 auf, von dem zwei Spannarme 2 und 3 ausgehen, an die Klemmarme 4 und 5 angeformt sind zur Aufnahme eines Fahrdrahtes 6. Mit jedem Spannarm 2, 3 ist jeweils eine von außen aufgesetzte Stoßlasche 7, 8 verbunden. Die Stoßlaschen 7 und 8 dienen dazu, eine nicht gezeigte anschließende Stromschiene an die gezeigte Stromschiene anzufügen. Die beiden Spannarme 2, 3 weisen jeweils auf ihrer nach außen gerichteten, dem anderen Spannarm 3, 2 nicht zugewandten Seite mindestens eine Anformung 9 auf. Diese Anformungen 9 erstrecken sich parallel zur Richtung des Fahrdrahtes 6. Die beiden Stoßlaschen 7, 8 weisen jeweils mindestens eine Ausnehmung 10 auf, die mit den Anformungen 9 der Spannarme 2, 3 korrespondieren. Die Stoßlaschen 7, 8 sind mit ihren Ausnehmungen 10 auf die Anformungen 9 der Spannarme 2, 3 aufgesetzt und sind mittels Schrauben 11 an den Spannarmen 2, 3 befestigt. Dabei sind die Schraubenköpfe der Schrauben 11 in den Stoßlaschen 7, 8 versenkt. Den Stoßlaschen 7, 8 gegenüberliegend sind auf den einander zugewandten Seiten der Spannarme 2, 3 innere Laschen 12, 13 angebracht. Dazu greifen die Schrauben 11, die die Stoßlaschen 7, 8 mit den Spannarmen 2, 3 verbinden, in die inneren Laschen 12, 13 ein. Während die Stoßlaschen 7, 8 zur mechanischen Verbindung von zwei aneinander grenzenden Stromschienen dienen, sind die inneren Laschen 12, 13 für die elektrische Verbindung zwischen den zwei aneinander grenzenden Stromschienen vorgesehen. Es sind sowohl eine stabile und einfache mechanische Verbindung als auch eine hohe Stromtragfähigkeit zwischen den Stromschienen gegeben.

## Patentansprüche

1. Stromschiene mit einem Querträger (1), von dem zwei Spannarme (2, 3) ausgehen, an die Klemmarme (4, 5) angeformt sind zur Aufnahme eines Fahrdrahtes (6), wobei mit jedem Spannarm (2, 3) jeweils eine Stoßlasche (7, 8) verbindbar ist zum Anfügen einer anschließenden Stromschiene, **dadurch gekennzeichnet, dass** die beiden Spannarme (2, 3) jeweils auf ihrer nach außen gerichteten, dem anderen Spannarm (3, 2) nicht zugewandten Seite zwischen dem Querträger (1) und dem Klemmarm (4, 5) mindestens eine Anformung (9) aufweisen, die sich parallel zur Richtung des Fahrdrahtes (6) erstrecken und eine Materialstärke des Spannarms im Bereich der Anformung (9) vergrößern, dass die beiden Stoßlaschen (7, 8) jeweils mindestens eine mit der mindestens einen Anformung (9) korrespondierende Ausnehmung (10) aufweisen und dass zum Anfügen der anschließenden Stromschiene die Stoßlaschen (7, 8) mit ihren Ausnehmungen (10) auf die Anformungen (9) der Spannarme (2, 3) von außen aufsetzbar sind.

2. Stromschiene nach Anspruch 1, **dadurch gekennzeichnet, dass** die Anformungen (9) der Spannarme (2, 3) ein rechteckiges, trapezförmiges, halbkreisförmiges, ovales oder dreieckiges Profil haben.

3. Stromschiene nach einem der Ansprüche 1 oder 2, **dadurch gekennzeichnet, dass** jeder Spannarm (2, 3) zwischen dem Querträger (1) und dem Klemmarm (4, 5) mindestens drei untereinander angeordnete Anformungen (9) aufweist und dass jede Stoßlasche (7, 8) die gleiche Anzahl untereinander angeordnete Ausnehmungen (10) aufweist.

4. Stromschiene nach einem der Ansprüche 1 bis 3, **dadurch gekennzeichnet, dass** den Stoßlaschen (7, 8) gegenüberliegend auf den einander zugewandten Seiten der Spannarme (2, 3) innere Laschen (12, 13) anbringbar sind.

5. Stromschiene nach Anspruch 4, **dadurch gekennzeichnet, dass** die inneren Laschen (12, 13) flächig an den Spannarmen (2, 3) anliegen.

6. Stromschiene nach einem der Ansprüche 1 bis 5, **dadurch gekennzeichnet, dass** die Stoßlaschen (7, 8) mittels Schrauben (11) an den Spannarmen (2, 3) befestigbar sind.

7. Stromschiene nach Anspruch 6, **dadurch gekennzeichnet, dass** die Schrauben (11) beschichtet sind und/oder eine klebstoffsicherung aufweisen.

8. Stromschiene nach einem der Ansprüche 6 oder 7, **dadurch gekennzeichnet, dass** die Schraubenköpfe der Schrauben (11) in den Stoßlaschen (7, 8) versenkt sind und dass die Materialstärke der Stoßlaschen (7, 8) nicht größer als die Bauhöhe eines Schraubenkopfes mit Unterlegscheibe ist.

9. Stromschiene nach den Ansprüchen 4 oder 5 und nach einem der Ansprüche 6 bis 8, **dadurch gekennzeichnet, dass** die inneren Laschen (12, 13) mittels der Schrauben (11) an den Spannarmen (2, 3) befestigbar sind, indem die Schrauben (11) die Spannarme (2, 3) durchdringen und in die inneren Laschen (12, 13) eingreifen.

10. Stromschiene nach einem der Ansprüche 1 bis 9, **dadurch gekennzeichnet, dass** mit jedem Spannarm (2, 3) zwei oder mehr Stoßlaschen (7, 8) verbindbar sind.

11. Stromschiene nach einem der Ansprüche 4 bis 10, **dadurch gekennzeichnet, dass** auf jedem Spannarm (2, 3) zwei oder mehr innere Laschen (12, 13) anbringbar sind.

## Claims

1. Current bar with a crossmember (1), from which two tensioning arms (2, 3) emanate, on which clamping arms (4, 5) are moulded for receiving a contact wire (6), wherein a butt strap (7, 8) can be connected to each tensioning arm (2, 3) in each instance in order to join a connecting current bar, **characterised in that** the two tensioning arms (2, 3) each have at least one moulding (9) on their side directed outwards and not facing the other tensioning arm (3, 2), between the crossmember (1) and the clamping arm (4, 5), said moulding (9) extending in parallel to the direction of the contact wire (6) and increasing a material thickness of the clamping arm in the region of the moulding (9), that the two butt straps (7, 8) each have at least one recess (10) corresponding to the at least one moulding (9) and that in order to join the connecting current bars, the butt straps (7, 8) with their recesses (10) can be placed on the mouldings (9) of the tensioning arms (2, 3).

2. Current bar according to claim 1, **characterised in that** the mouldings (9) of the tensioning arms (2, 3) have a rectangular, trapezoidal, semi-circular, oval or triangular profile.

3. Current bar according to one of claims 1 or 2, **characterised in that** each tensioning arm (2, 3) has at least three mouldings (9) arranged one below the other between the crossmember (1) and the clamping arms (4, 5) and that each butt strap (7, 8) has the same number of recesses (10) arranged one below the other.

4. Current bar according to one of claims 1 to 3, **characterised in that** inner straps (12, 13) can be attached to the sides of the tensioning arms (2, 3) facing one another, opposite to the butt straps (7, 8).

5. Current bar according to claim 4, **characterised in that** the inner straps (12, 13) have a flat surface in contact with the tensioning arms (2, 3).

6. Current bar according to one of claims 1 to 5, **characterised in that** the butt straps (7, 8) can be fastened on the tensioning arms (2, 3) by means of screws (11).

7. Current bar according to claim 6, **characterised in that** the screws (11) are coated and/or have an adhesive safety mechanism.

8. Current bar according to one of claims 6 or 7, **characterised in that** the screw heads of the screws (11) are countersunk into the butt straps (7, 8) and that the material thickness of the butt straps (7, 8) is no greater than the installation height of a screw head with washer.

9. Current bar according to claims 4 or 5 and according to one of claims 6 to 8, **characterised in that** the inner straps (12, 13) can be fastened on the tensioning arms (2, 3) by means of the screws (11), by the screws (11) penetrating the tensioning arms (2, 3) and engaging in the inner straps (12, 13) .

10. Current bar according to one of claims 1 to 9, **characterised in that** two or more butt straps (7, 8) can be connected to each tensioning arm (2, 3).

11. Current bar according to one of claims 4 to 10, **characterised in that** two or more inner straps (12, 13) can be attached to each tensioning arm (2, 3).

## Revendications

1. Rail de courant ayant une traverse (1), de laquelle partent deux bras (2, 3) de serrage, sur lesquels des bras (4, 5) de pincement sont formés pour la réception d'un fil (6) de contact, dans lequel à chaque bras (2, 3) de serrage peut être reliée respectivement une patte (7, 8) pare-chocs de jonction d'un rail de courant se raccordant, **caractérisé en ce que** les deux bras (2, 3) de serrage ont respectivement, de leurs côtés dirigés vers l'extérieur et non tournés vers l'autre bras (3, 2) de serrage, entre la traverse (1) et le bras (4, 5) de pincement, au moins une conformation (9), qui s'étend parallèlement à la direction du fil (6) de contact et augmente l'épaisseur de matière du bras de serrage dans la partie de la conformation (9), **en ce que** les deux pattes (7, 8) pare-chocs ont respectivement au moins un évidement (10) correspondant à la au moins une conformation (9) et **en ce que**, pour la jonction du rail de courant se raccordant, les pattes (7, 8) pare-chocs peuvent par leurs évidements (10) être posées de l'extérieur sur les conformations (9) des bras (2, 3) de serrage.

2. Rail de courant suivant la revendication 1, **caractérisé en ce que** les conformations (9) des bras (2, 3) de serrage ont un profil rectangulaire, trapézoïdal, en forme de demi-cercle, ovale ou triangulaire.

3. Rail de courant suivant l'une des revendications 1 ou 2, **caractérisé en ce que** chaque bras (2, 3) de serrage a, entre la traverse (1) et le bras (4, 5) de pincement, au moins trois conformations (9) disposées les unes en dessous des autres et **en ce que** chaque patte (7, 8) pare-chocs a le même nombre d'évidements (10) disposés les uns en dessous des autres.

4. Rail de courant suivant l'une des revendications 1 à 3, **caractérisé en ce qu'**en opposition aux pattes (7, 8) pare-chocs des pattes (12, 13) intérieures peuvent être mises sur les côtés, tournés l'un vers l'autre, des bras (2, 3) de serrage.

5. Rail de courant suivant la revendication 4, **caractérisé en ce que** les pattes (12, 13) intérieures s'appliquent par une surface aux bras (2, 3) de serrage.

6. Rail de courant suivant l'une des revendications 1 à 5, **caractérisé en ce que** les pattes (7, 8) pare-chocs peuvent être fixées aux bras (2, 3) de serrage au moyen de vis (11).

7. Rail de courant suivant la revendication 6, **caractérisé en ce que** les vis (11) sont revêtues et/ou ont une fixation par de la colle.

8. Rail de courant suivant l'une des revendications 6 ou 7, **caractérisé en ce que** les têtes des vis (11) sont noyées dans les pattes (7, 8) pare-chocs et **en ce que** l'épaisseur de matériau des pattes (7, 8) pare-chocs n'est pas plus grande que la hauteur de construction d'une tête de vis ayant une rondelle plate.

9. Rail de courant suivant les revendications 4 ou 5 ou suivant l'une des revendications 6 à 8, **caractérisé en ce que** les pattes (12, 13) intérieures peuvent être fixées aux bras (2, 3) de serrage au moyen des vis (11) par le fait que les vis (11) traversent les bras (2, 3) de serrage et pénètrent dans les pattes (12, 13) intérieures.

10. Rail de courant suivant l'une des revendications 1 à 9, **caractérisé en ce que** deux ou plusieurs pattes (7, 8) pare-chocs peuvent être reliées à chaque bras de serrage.

11. Rail de courant suivant l'une des revendications 4 à 10, **caractérisé en ce que** deux ou plusieurs pattes (12, 13) intérieures peuvent être mises sur chaque bras (2, 3) de serrage.
